Europäisches Patentamt

European Patent Office

Office européen des brevets

(19)

(11) Veröffentlichungsnummer: **0 174 921**

**A2**

# (12) EUROPÄISCHE PATENTANMELDUNG

(21) Anmeldenummer: **85890197.8**

(22) Anmeldetag: **30.08.85**

(51) Int. Cl.⁴: **B 29 C 65/04**
**A 43 B 5/04**
**//B29L31:50**

(30) Priorität: **13.09.84 AT 2921/84**

(43) Veröffentlichungstag der Anmeldung:
**19.03.86 Patentblatt 86/12**

(84) Benannte Vertragsstaaten:
**CH DE FR IT LI**

(71) Anmelder: **Koflach Sportgeräte Gesellschaft m.b.H**
**Falkestrasse 6**
**A-1010 Wien(AT)**

(72) Erfinder: **Hensler, Adolf**
**Michael Gruber Strasse 10**
**A-8580 Köflach(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) **Verfahren zur Herstellung von Polsterungen für Skischuhe, insbesondere zur Herstellung von Innenschuhen für Skischuhe.**

(57) Zur Herstellung von Polsterungen wird eine erste Schicht (11) aus thermoplastischem, schweißbarem Kunstoff in eine Schablone (17) eingelegt, worauf polsterndes Material (12, 13, 14, 15) als Zwischenlage aufgelegt wird. Das polsternde Material läßt hiebei Bereiche der ersten Schicht (11) unbedeckt, welche in der Folge mit einer zweiten auf das polsternde Material (14) aufgelegten Schicht (16) aus thermoplastischem, schweißbarem Kunststoff verschweißt werden. Die Verschweißung erfolgt nur in Bereichen, in welchen die Schichten (11, 16) unmittelbar ohne Zwischenschaltung von polsterndem Material gegeneinander gepreßt werden. Die Innenkontur (18) der Schablone (17) entspricht im wesentlichen der Außenkontur der Schichten (11, 16). Die Schablone (17) ist aus einem Material mit hohen dielektrischen Verlusten ausgebildet, sodaß eine dichte Verschweißung am Rande der Schichten (11, 16) sichergestellt ist.

FIG. 4

- 1 -

## Verfahren zur Herstellung von Polsterungen für Skischuhe, insbesondere zur Herstellung von Innenschuhen für Skischuhe

Die Erfindung bezieht sich auf ein Verfahren zur Herstellung von polsterndem Material für Skischuhe, insbesondere für die Herstellung von Innenschuhen für Skischuhe, mit einer äußeren und einer inneren Schicht aus schweißbarem, thermoplastischem Kunststoff und Zwischenlagen aus polsterndem Material, bei welchem das polsternde Material auf eine der beiden Schichten aufgelegt wird, worauf die zweite Schicht aufgelegt wird und das polsternde Material durch unmittelbares Verschweißen der beiden Schichten in von polsternden Zwischenlagen freien Bereichen in seiner Lage fixiert wird.

Für die Herstellung von Innenschuhen und polsternden Bereichen in Innenschuhen ist es bereits bekannt, mehrlagige Strukturen zu verwenden, wobei die Verbindung der Schichten durch bekannte Verfahrensmaßnahmen wie Kleben, Schweißen oder Vernähen erfolgte. Aus der EP-A-13 269 ist es bereits bekannt, das polsternde Material selbst als thermoplastisches Material auszubilden und die exakte Positionierung der polsternden Bereiche dadurch herzustellen, daß mit einem Preßstempel die Porostruktur unter Einwirkung von Hitze aufgeschmolzen wird und unmittelbar die beiden Außenlagen unter Zusammenschmelzen der dazwischenliegenden Polsterschicht aneinandergeheftet werden. Nachteilig bei diesen Verfahrensweisen ist der relativ harte Rand der Schweißstellen, der darauf zurückzuführen ist, daß das Polsterungsmaterial in diesem Bereich eingeschmolzen wird und hiebei seine Porostruktur verliert.

Die Erfindung zielt nun darauf ab, unter Ausnutzung der Vorteile, die sich durch Verschweißen von Folien erzielen lassen, beliebige Polsterungsmaterialien einzusetzen und unterschiedliche Polsterungsstärken ohne Nachteile im Bereich der Verbindungsstelle der die beiden Außenschichten bildenden Kunststoffbahnen und insbesondere ohne härtere Ränder der Polsterungsstellen herzustellen. Zur Lösung dieser Aufgabe besteht die Erfindung im wesentlichen darin, daß die erste der beiden Schichten in eine der Außenkontur dieser Schicht entsprechende Schablone eingelegt wird, daß hierauf die polsternden Zwischenlagen aufgelegt und die zweite Schicht in die Schablone eingelegt werden, worauf die Schweißung mit einer der Innenkontur der Schablone entsprechenden Schweißmatrize vorgenommen wird. Mit einer derartigen Verfahrensweise ist es möglich, beliebige polsternde Materialien und insbesondere auch polsternde Materialien ohne thermoplastische Eigenschaften, wie beispielsweise Watte,zu verwenden, und die exakte Lage der Polsterung wird durch den Schweißprozeß sichergestellt. Die Polsterung selbst wird zwischen den beiden verschweißten Lagen lediglich durch die Schweißnähte in Position gehalten und ist im übrigen von Verbindungsmitteln, wie Klebestellen oder Schweißstellen, völlig frei gehalten.

Durch die Verschweißnähte werden allseitig geschlossene Kammern für das eingeschlossene polsternde Material ausgebildet. Auf diese Weise können in Bereichen, in denen eine höhere Polsterung gewünscht wird, mehrere Lagen von polsterndem Material übereinandergeschaltet werden und es kann die Polsterung individuell den nachfolgenden Bedürfnissen bei dem Aufbau bzw. dem Auflegen auf die erste der beiden zu verschweißenden Schichten bereits eingestellt werden. Eine Veränderung der Eigenschaften ist durch den nachfolgenden Schweißvorgang dann nicht mehr zu befürchten, da der Schweißvorgang lediglich die beiden äußeren Schichten betrifft und die dazwischenliegende Polsterung mit unterschiedlicher Polsterungshöhe und unterschiedlichen Polsterungseigenschaften durch die Schweißnähte lediglich in ihrer Position fixiert. Bei größeren zu polsternden Bereichen wird das erfindungsgemäße Verfahren hiebei in einfacher Weise so durchgeführt, daß innerhalb der polsternden Bereiche Unterbrechungen ausgebildet werden, innerhalb welcher die verschweißbaren Schichten unmittelbar miteinander verbunden werden.

Dadurch, daß eine der Außenkontur der Schichten entsprechende Schablone verwendet wird, wird eine Veränderung der Lage der beiden Schichten sowie der dazwischenliegenden Polsterschichten beim Absenken der Schweißmatrize mit Sicherheit verhindert und es wird die Möglichkeit geschaffen, mit relativ schmalen Schweißstegen das Auslangen zu finden. Vor allem bei Einsatz von polsternden Zwischenlagen mit starken Höhenunterschieden über eine relativ große Fläche bringt die Verwendung einer Schablone bedeutende Vorteile in bezug auf die Lagesicherung mit sich. Um eine vollständige Sicherheit gegen seitliches Ausweichen einer der beiden Schichten oder ein Verrücken der polsternden Zwischenlagen zu gewährleisten, wird vorzugsweise so vorgegangen, daß die Dicke der beiden Schichten zumindest nahe dem Rand der Schablone etwa gleich der lichten Höhe der Schablone in Richtung der Anstellbewegung der Schweißmatrize gemessen gewählt wird.

Der wesentliche Vorteil des erfindungsgemäßen Verfahrens besteht hiebei darin, daß Kleber und andere Mittel zur Lagefixierung, welche in der Folge brüchig werden können und deren Haltbarkeit begrenzt ist, entfallen können und daß das Polsterungsmaterial selbst nicht in den Schweißvorgang miteinbezogen wird. Die erfindungsgemäße Verfahrensweise erlaubt es zum Unterschied von Verfahren, bei welchen die beiden Schichten miteinander vernäht werden, die beiden Schichten vor dem Verschweißen vorzuspannen, so daß nachfolgend aus den gebildeten Rohlingen bereits eine Vorspannung in Richtung der gewünschten Faltung, beispielsweise zur Herstellung eines Innenschuhs, vorgegeben werden kann. Es ist mit dem erfindungsgemäßen Verfahren möglich, die beiden Schichten in Rahmen gespannt zu halten und auch die beiden Schichten mit unterschiedlicher Spannung zu halten, so daß der verschweißte Teil unmittelbar eine Vorspannung in Richtung seiner nachfolgenden Faltung erhält. Für die Ausbildung von Innenschuhen werden daher in vorteilhafter Weise die beiden miteinander zu verschweißenden Lagen mit unterschiedlicher flächiger Vorspannung im Rahmen eingespannt.

Die Verwendung einer Schablone ermöglicht es darüberhinaus die Qualität der äußeren Schweißnaht in einfacher Weise zu verbessern. Die äußere Schweißnaht muß ein hohes Maß an Dichtheit aufweisen, um sicherzustellen, daß Feuchtigkeit nicht in das Innere zwischen den beiden Schichten und damit an die stark saugfähigen Polsterlagen gelangt. Wenn, wie es einer bevorzugten Verfahrensweise entspricht, die Schablone aus einem Material mit hohen dielektrischen Verlusten, insbesondere aus PVC, ausgebildet wird, erwärmt sich die Schablone im Bereich dieser äußeren Schweißnähte und stellt auf diese Weise eine längere Einwirkung der Hitze durch das Schweißverfahren sicher. Vor allen Dingen aber wird eine vorzeitige Abkühlung vor Erzielung einer zuverlässigen Schweißverbindung im Bereich der Ränder mit Sicherheit vermieden, so daß die Dichtheit in der Verbindung verbessert wird.

Um bei der Verwendung einer Schablone zu erreichen, daß einzelne Teilbereiche der polsternden Zwischenlage nach der Herstellung der Schweißverbindung die gebildeten Kammern voll ausfüllen, und um bestimmte Polsterungseigenschaften gezielt beeinflussen zu können, wird mit Vorteil so vorgegangen, daß die Schweißmatrize unter Zwischenschaltung von nicht schweißbarem, nichtmetallischem Material mit geringen dielektrischen Verlusten, vorzugsweise elastisch verformbarem Material, in von Schweißnähten freizuhaltenden Bereichen angestellt und angepreßt wird. Auf diese Weise können Teilbereiche der polsternden Zwischenlage während des Schweißvorganges komprimiert werden, worauf nach dem Herstellen der Schweißnähte eine elastische Expansion des Polsterungsmaterials erfolgt und die jeweiligen Kammern, in welchen das komprimierte Polsterungsmaterial enthalten ist, vom Polsterungsmaterial voll ausgefüllt werden.

Größere gepolsterte Bereiche lassen sich hiebei mit Vorteil so ausbilden, daß größere polsternde Bereiche mit ungepolsterten Unterbrechungen ausgebildet werden, innerhalb welcher die verschweißbaren Schichten unmittelbar miteinander verbunden werden, wobei vorzugsweise die ungepolsterten Unterbrechungen von punktförmigen Schweißverbindungen in den Polstermaterial freigehaltenen Bereichen gebildet sind.

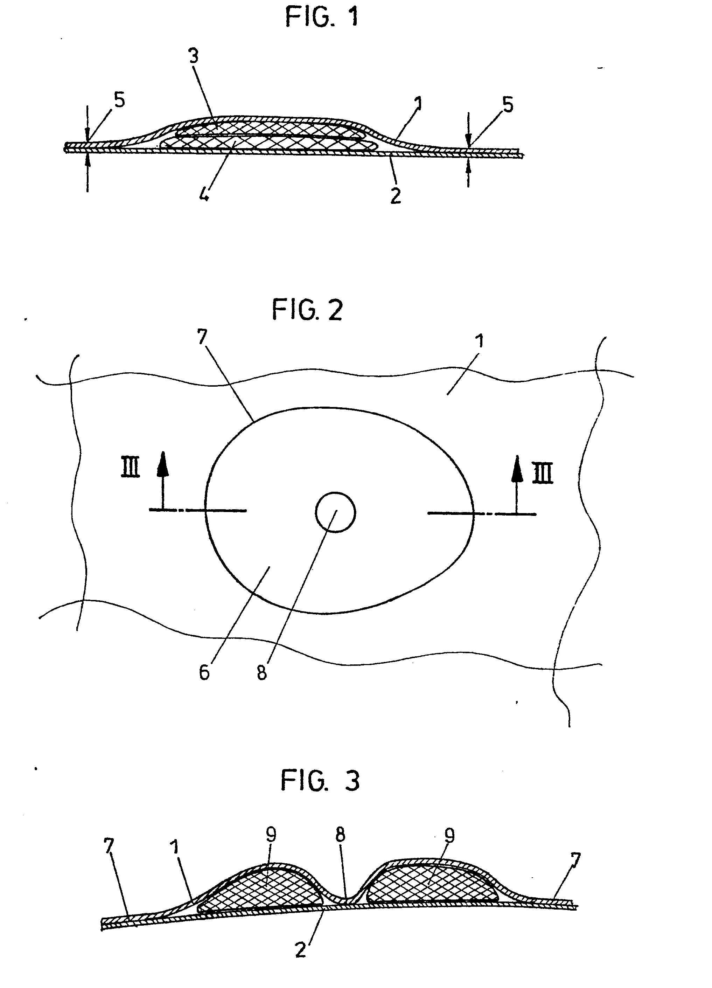

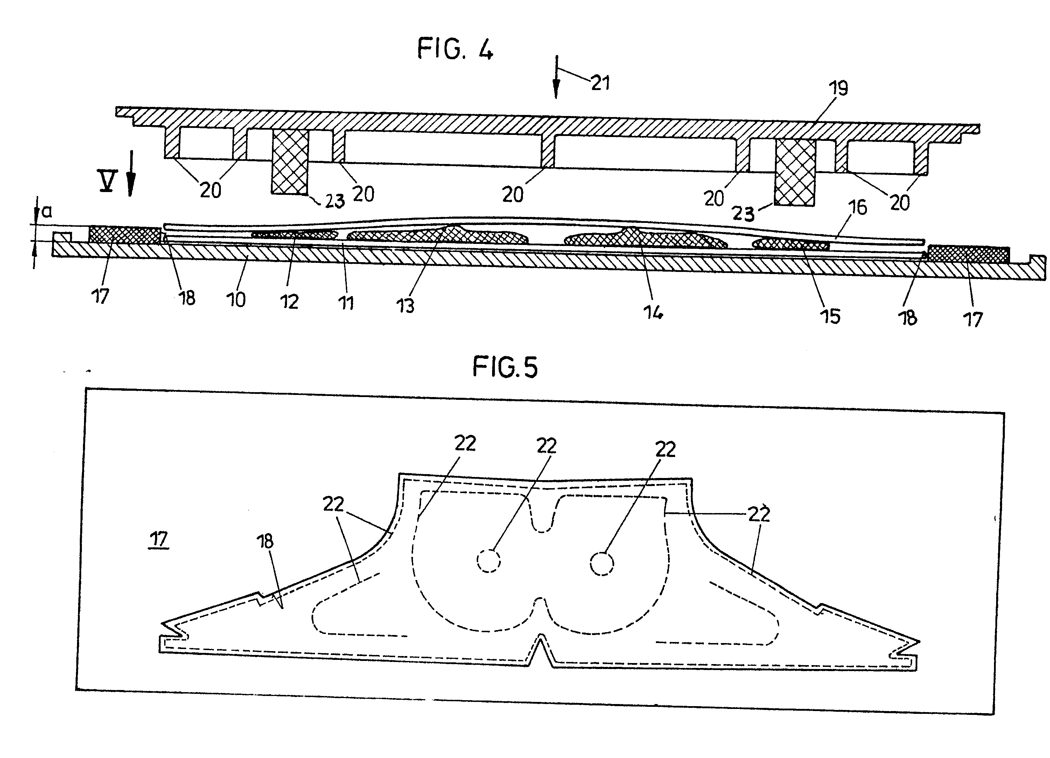

Die Erfindung wird nachfolgend an Hand von in der Zeichnung schematisch dargestellten Ausführungsbeispielen näher erläutert. In dieser zeigen Fig. 1 einen Querschnitt durch einen erfindungsgemäß hergestellten polsternden Bereich, Fig. 2 eine Draufsicht auf einen von der Darstellung in Fig. 1 verschiedenen polsternden Bereich, Fig. 3 einen Schnitt nach der Linie III-III der Fig. 2, Fig. 4 einen schematischen Schnitt durch eine Vorrichtung zur Durchführung des erfindungsgemäßen Verfahrens und Fig. 5 eine Draufsicht auf die Schablone zur Verwendung bei der Einrichtung nach Fig. 4, im Sinne des Pfeiles V der Fig. 4.

In Fig.1 ist eine äußere Schicht 1 eines thermoplastischen verschweißbaren Kunststoffes mit einer inneren Schicht 2 aus mit der äußeren Schicht 1 verschweißbarem Kunststoff verbunden. Zwischen diesen beiden Schichten 1 und 2 sind polsternde Bereiche, beispielsweise aus Watte, vorgesehen, wobei zur Erzielung der entsprechenden Polsterungshöhe hier zwei verschiedene Lagen von Polstermaterial 3 und 4 vorgesehen sind. Die Schweißstellen sind mit 5 bezeichnet und befinden sich außerhalb der Kontur des polsternden Materials, so daß der Schweißvorgang selbst ohne Beeinflussung der Polsterschichten vorgenommen wird.

Bei der Ausbildung nach Fig.2 ist die äußere Schicht 1 ersichtlich, welche einen polsternden Bereich 6 durch eine kreisförmige Schweißnaht 7 begrenzt. Da der polsternde Bereich 6 relativ groß ist, wird zur besseren Positionierung der Polsterung in ihrer Lage ein mittlerer Bereich der Polsterung freigestellt, welcher mit 8 bezeichnet ist. Wie sich aus dem Querschnitt nach Fig.3 ergibt, wird im Bereich 8 eine unmittelbare Verschweißung der äußeren Schicht 1 mit der inneren Schicht 2 vorgenommen, und es werden die kreisringförmig angeordneten Polsterungen 9 sowohl nach innen als auch nach außen im Bereich der ringförmigen Schweißnaht 7 in ihrer exakten Position gehalten.

In Fig. 4 ist eine Einrichtung zur Durchführung des erfindungsgemäßen Verfahrens schematisch dargestellt. Mit 10 ist ein Schweißtisch bezeichnet, auf welchen eine erste Schicht 11 aus schweißbarem, thermoplastischem Kunststoff aufgebracht wird. Diese erste Schicht 11 bildet das Oberleder und wird in der Folge für die Herstellung des Innenschuhes als Außenseite verwendet. Auf diese erste Schicht 11 werden Polsterlagen 12, 13, 14 und 15 in der gewünschten Position aufgelegt, worauf die zweite Schicht aus schweißbarem, thermoplastischem Kunststoff, welche in der Folge als Futter Verwendung findet und mit 16 bezeichnet ist, aufgelegt wird. Auf dem Schweißtisch 10 ist hier eine Schablone 17 festgelegt, deren Innenkontur 18 dem Umriß der miteinander zu verschweißenden Schichten entspricht. Die Höhe der Schablone 17 ist mit a bezeichnet und so bemessen, daß sie etwa der Dicke der beiden Schichten 11 und 16 an den zu verschweißenden Rändern entspricht. In jedem Falle soll die Höhe a so bemessen sein, daß sie größer ist als die Dicke der Schicht 11, so daß auch die Futterschicht 16 von der Schablone in ihrer Position gehalten werden kann. Für den Schweißvorgang wird eine Schweißmatrize 19 mit Schweißstegen 20 in Richtung des Pfeiles 21 angestellt. Die Schweißstege bilden in der Folge die Schweißnähte aus, welche in Fig. 5 mit 22 angedeutet sind. Die Schablone 17, wie sie in Fig. 5 in der Draufsicht dargestellt ist, besteht aus PVC und erwärmt sich damit im Bereich der Innenkontur 18, welche dem äußersten Schweißsteg 20 der Schweißmatrize 19 benachbart ist. Die äußere Schweißnaht kühlt auf diese Weise verzögert aus. Mit 23 sind nicht schweißbare, elastische verformbare Teile bezeichnet, mittels welcher während des Schweißvorganges Teilbereiche der Polsterung komprimiert werden können.

Patentansprüche:

1. Verfahren zur Herstellung von polsterndem Material für Skischuhe, insbesondere für die Herstellung von Innenschuhen für Skischuhe, mit einer äußeren (16) und einer inneren Schicht (11) aus schweißbarem, thermoplastischem Kunststoff und Zwischenlagen (12, 13, 14, 15) aus polsterndem Material, bei welchem das polsternde Material auf eine der beiden Schichten (11) aufgelegt wird, worauf die zweite Schicht (16) aufgelegt wird und das polsternde Material (12, 13, 14, 15) durch unmittelbares Verschweißen der beiden Schichten (11, 16) in von polsternden Zwischenlagen (12, 13, 14, 15) freien Bereichen (8) in seiner Lage fixiert wird, dadurch gekennzeichnet, daß die erste der beiden Schichten (11) in eine der Außenkontur dieser Schicht (11) entsprechende Schablone (17) eingelegt wird, daß hierauf die polsternden Zwischenlagen (12, 13, 14, 15) aufgelegt und die zweite Schicht (16) in die Schablone (17) eingelegt werden, worauf die Schweißung mit einer der Innenkontur (18) der Schablone (17) entsprechenden Schweißmatrize (19) vorgenommen wird.

2. Verfahren nach Anspruch 1, dadurch gekennzeichnet, daß die Dicke der beiden Schichten (11, 16) zumindest nahe dem Rand der Schablone (17) höchstens gleich der lichten Höhe (a) der Schablone (17) in Richtung der Anstellbewegung (21) der Schweißmatrize (9) gemessen gewählt wird.

3. Verfahren nach Anspruch 1 oder 2, dadurch gekennzeichnet, daß die Schweißmatrize (19) unter Zwischenschaltung von nicht schweißbarem, nichtmetallischem Material (23) mit geringen dielektrischen Verlusten, vorzugsweise elastisch verformbarem Material, in von Schweißnähten (22) freizuhaltenden Bereichen angestellt und angepreßt wird.

4. Verfahren nach Anspruch 1, 2 oder 3, dadurch gekennzeichnet, daß die Schablone (17) aus einem Material mit hohen

0174921

- 9 -

dielektrischen Verlusten, insbesondere aus PVC, ausgebildet wird.

5. Verfahren nach einem der Ansprüche 1 bis 4, dadurch gekennzeichnet, daß größere polsternde Bereiche mit ungepolsterten Unterbrechungen ausgebildet werden, innerhalb welcher die verschweißbaren Schichten (11, 16) unmittelbar miteinander verbunden werden.

6. Verfahren nach einem der Ansprüche 1 bis 5, dadurch gekennzeichnet, daß die ungepolsterten Unterbrechungen von punktförmigen Schweißverbindungen in von Polstermaterial (12, 13, 14, 15) freigehaltenen Bereichen (8) gebildet sind.

FIG. 1

FIG. 2

FIG. 3

# FIG. 4

# FIG.5